# EUROPEAN PATENT APPLICATION

(11) **EP 2 189 199 A2**
(43) Date of publication of application: **26.05.2010**
(21) Application number: 09014537.6
(22) Date of filing: 21.11.2009
(51) Int. Cl.: A63F 13/12

(54) **System and method for enabling a local user of a real-life simulation environment to interact with a remote user of a corresponding virtual environment**

(30) Priority: 24.11.2008 US 313835
(71) Applicant: Disney Enterprises, Inc., Burbank CA 91512 (US)
(72) Inventor: Ackley, Jonathan Michael, Glendale, California 91202 (US); Purvis, Christopher J., La Crescenta, California 91214 (US)
(74) Representative: Weitzel, Wolfgang

(57) **Abstract**

Disclosed are systems and methods for enabling a local user of a real-life simulation environment to interact with a remote user of a corresponding virtual environment. In one embodiment, such a system comprises a venue including the real-life simulation environment for use by the local user, a venue management system configured to control real events occurring within the real-life simulation environment, and a multi-user experience server interactively linked to the venue management system. The multi-user experience server includes a virtual environment generator configured to produce the virtual environment corresponding to the real-life simulation environment, and the system further comprises a communication network enabling the local user and the remote user to access the multi-user experience server concurrently. The multi-user experience server is configured to enable the local user to perceive the remote user and to affect virtual events in the virtual environment corresponding to the real-life simulation environment.

## Description

### BACKGROUND OF THE INVENTION

### 1. FIELD OF THE INVENTION

The present invention relates to computer-enhanced entertainment. More particularly, the present invention relates to enabling interaction among users of a computer virtual environment and users of a real-life simulation environment.

### 2. BACKGROUND ART

Heroic fables in which ordinary people are called upon to accomplish extraordinary deeds in the face of extreme adversity are classic fodder for myth making. Particularly when combined with the rich sensory experience created by modem special effects, these dramatic and compelling combinations of high adventure, heroism, and romance, are an almost irresistible lure to the consumer public, for whom the inspiration produced by the triumph of fundamental human virtues may be as highly valued as the entertainment provided by the extraordinary visual effects.

One conventional way for a consumer to project themselves into one of these fabulous worlds to "live out" the uplifting experience of its fantasy adventure, has been through use of a real-life simulation environment. For example, a real-life simulation environment, such as a theme park ride environment, can, with the participation of a willing imagination, partially reproduce a desirable fantasy adventure experience, at least for as long as the ride lasts. Theme park attractions such as Space Mountain or the Indiana Jones Adventure ride, for instance, are presently offered as alternative roller coaster type rides at the Disneyland theme park in Anaheim, California, designed to transport a consumer into real-life simulations of those adventure environments.

Although capable of delivering a satisfying visceral thrill by virtue of dramatic physical motion and powerful special effects, a significant limitation to the effectiveness with which any conventional theme park attraction can convey the realism of the simulated experience is the absence of consumer interaction with the events of the experience. That is to say, despite being stimulating, conventional theme park adventure rides are fundamentally passive experiences for the consumer, in which they are literally just along for a ride that executes an event sequence that is predetermined by the ride control system. As a result, the consumer lacks an opportunity to interact with the ride environment in a way that can alter the occurrence of events within the experience, which, in turn substantially reduces the realism of the experience.

Another conventional way for a consumer to project themselves into a fantasy adventure in order to simulate living out its events, is through use of a computer-based virtual environment. Typical computer based games and simulations utilize computer graphics to mimic a three-dimensional real-life environment, using the two-dimensional presentation available through a computer monitor or mobile device display screen. Because virtual environments are software based, rather than requiring the combination of software and hardware needed to support a brick-and-mortar theme real-life simulation environment, they lend themselves much more readily to interactive implementations. As a result, adventure experiences reliant on virtual environments may provide consumers with the dynamic interactivity absent from conventional real-life simulation environment based experiences.

Nevertheless, despite their described advantages, computer virtual environments are inevitably constrained by their format. Because they are virtual experiences, they typically fail to provide consumers engaged with their environments the real visceral thrill associated with a physical adventure ride. Furthermore, absent from conventional adventures utilizing virtual environments is the sense that the consumer's virtual actions produce any real event consequences for either an ally or an adversary in the interactive adventure, which dilutes the realism of the simulation even further.

Thus, both of the described conventional approaches to providing consumers with simulated reality environments are associated with limitations that substantially interfere with the realism of the consumer experience. On the one hand, the consumer of an adventure experience supported by a real-life simulation environment enjoys the physical thrill of the experience, but is prevented by a lack of interactivity from being more than a passive participant in a predetermined event sequence. On the other hand, the consumer of an adventure experience supported by a computer virtual environment may interact dynamically with the adventure, but is deprived of both the thrill of physical motion and the sense that their own actions are consequential for other participants in the adventure, whether they be friends or foes.

Accordingly, there is a need to overcome the drawbacks and deficiencies in the art by providing a simulation environment enabling users of a real-life simulation environment to interact with users of a corresponding virtual environment so as to enhance the realism of the adventure experience for both groups of users.

### SUMMARY OF THE INVENTION

There are provided systems and methods for enabling a local user of a real-life simulation environment to interact with a remote user of a corresponding virtual environment, substantially as shown in and/or described in connection with at least one of the figures, as set forth more completely in the claims.

### BRIEF DESCRIPTION OF THE DRAWINGS

The features and advantages of the present invention will become more readily apparent to those ordinarily skilled in the art after reviewing the following detailed description and accompanying drawings, wherein:
Figure 1 shows a diagram of a system for enabling a local user of a real-life simulation environment to interact with a remote user of a corresponding virtual environment, according to one embodiment of the present invention;
Figure 2 shows a more detailed embodiment of a system for enabling a local user of a real-life simulation environment to interact with a remote user of a corresponding virtual environment, focusing on the local system elements supporting the real-life simulation environment, according to one embodiment of the present invention;
Figure 3 shows a more detailed embodiment of a system for enabling a local user of a real-life simulation environment to interact with a remote user of a corresponding virtual environment, focusing on interactivity of the remote user, according to one embodiment of the present invention; and
Figure 4 is a flowchart presenting a method for enabling a local user of a real-life simulation environment to interact with a remote user of a corresponding virtual environment, according to one embodiment of the present invention.

### DETAILED DESCRIPTION OF THE INVENTION

The present application is directed to a system and method for enabling a local user of a real-life simulation environment to interact with a remote user of a corresponding virtual environment. The following description contains specific information pertaining to the implementation of the present invention. One skilled in the art will recognize that the present invention may be implemented in a manner different from that specifically discussed in the present application. Moreover, some of the specific details of the invention are not discussed in order not to obscure the invention. The specific details not described in the present application are within the knowledge of a person of ordinary skill in the art. The drawings in the present application and their accompanying detailed description are directed to merely exemplary embodiments of the invention. To maintain brevity, other embodiments of the invention, which use the principles of the present invention, are not specifically described in the present application and are not specifically illustrated by the present drawings. It should be borne in mind that, unless noted otherwise, like or corresponding elements among the figures may be indicated by like or corresponding reference numerals.

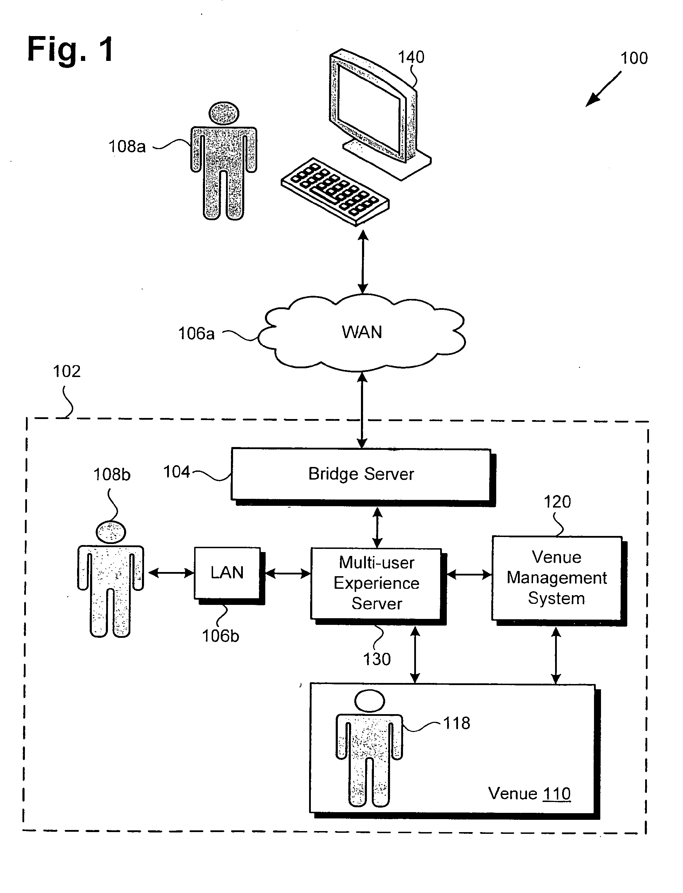

Figure 1 is a diagram of a system for enabling a local user of a real-life simulation environment to interact with a remote user of a corresponding virtual environment, according to one embodiment of the present invention. In the embodiment of Figure 1, multi-user interaction environment 100 shows multi-user experience server 130 located in venue property 102, interactively communicating with client computer 140, via wide area network (WAN) 106a and bridge server 104. As may be seen from Figure 1, venue property 102 encompasses venue 110, venue management system 120, and local area network (LAN) 106b, in addition to multi-user experience server 130 and bridge server 104. Also shown in Figure 1 is remote user 108a utilizing client computer 140, remote user 108b communicating with multi-user experience server 130 through LAN 106b, and local user 118 interacting with multi-user experience server 130 through venue 110.

For ease of visualization, let us continue the present description of Figure 1 under the premise that venue property 102 is a theme park, that venue 110 is a theme park attraction comprising a real-life simulation environment (not shown in Figure 1), and that multi-user experience server 130 is configured to host a virtual environment (also not shown in Figure 1) corresponding to the real-life simulation environment provided by venue 110. More specifically, let us assume that the real life simulation environment provided by venue 110 includes a roller coaster type adventure ride/shooting game configured to simulate a space combat sequence, controlled by venue management system 120, and that the virtual environment provided by multi-user experience server 130 is a computer virtual replication of the space combat sequence.

The system of Figure 1 enables local user 118, who according to the present specific example is a theme park visitor participating in the real-life simulation environment provided by venue 110 as a roller coaster rider, for example, to interact with remote users 108a and 108b, through multi-user experience server 130. It is noted that for the purposes of the present application, the expression "local" refers to the real-life simulation environment provided by venue 110. Consequently only users of the real-life simulation environment of venue 110 are local users, so that both of users 108a and 108b are termed remote users, despite remote user 108b being shown to situated within the confines of the theme park represented by venue property 102.

Remote user 108a, who, as shown in Figure 1, may be present outside of the confines of venue property 102, is nevertheless able to interact with the virtual environment corresponding to the real-life simulation environment of venue 110, via client computer 140 and WAN 106a, which in the present embodiment may correspond to the Internet, for example. Although in the present embodiment, client computer 140 is shown as a personal computer (PC), in other embodiments client computer 140 may comprise a mobile communication device or system, such as a tablet computer, mobile telephone, personal digital assistant (PDA), gaming console, or digital media player, for example. In addition to remote user 108a, remote user 108b, located within the theme park, is able to interact with remote user 108a and local user 118, through LAN 106b and multi-user experience server 130, by means of a communication interface device (not shown in Figure 1), such as a mobile communication device, as described with reference to client computer 140, or a network terminal provided by the theme park, for example.

Communications among remote user 108a, remote user 108b, and local user 118 may be networked through multi-user experience server 130 and allow remote users 108a and 108b, and local user 118 to access multi-user experience server 130 concurrently. As a result, local user 118 is enabled to perceive remote users 108a and 108b, by means of their respective avatars, for example, and to affect virtual events in the virtual environment engaged by remote users 108a and 108b. Moreover, remote users 108a and 108b, in addition to perceiving one another and affecting circumstances in their shared virtual environment, in some embodiments are enabled to perceive local user 118 and affect real events in the real-life simulation environment of venue 110.

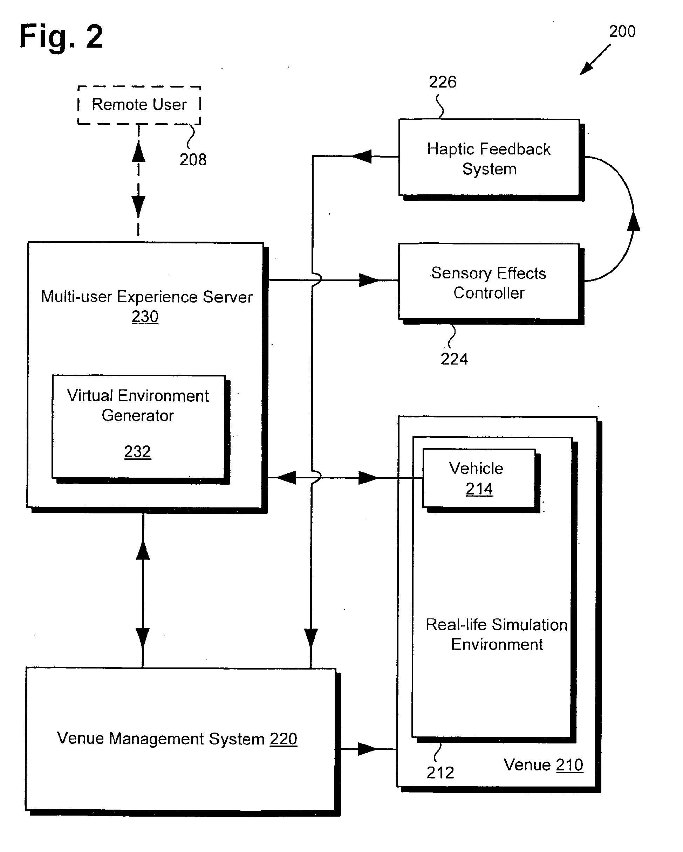

Moving now to Figure 2, Figure 2 shows a more detailed embodiment of a system for enabling a local user of a real-life simulation environment to interact with a remote user of a corresponding virtual environment, focusing on the local system elements supporting the real-life simulation environment, according to one embodiment of the present invention. According to the embodiment of Figure 2, system 200 comprises venue 210, venue management system 220, and multi-user experience server 230, corresponding respectively to venue 110, venue management system 120, and multi-user experience server 130, in Figure 1. In addition, Figure 2 shows remote user 208, corresponding to either of remote users 108a or 108b in Figure 1, as well as sensory effects controller 224 and haptic feedback system 226, which are not explicitly presented in the system of Figure 1.

As shown in Figure 2, venue 210 includes vehicle 214 interactively linked to multi-user experience server 230, which, additionally, hosts virtual environment generator 232. The arrows shown in Figure 2 are provided to indicate the direction of data flow for the embodiment of system 200, and are merely illustrative. Other embodiments may include fewer or more constituent elements, may consolidate or further distribute the elements shown in Figure 2, and/or may be implemented using other configurations for data flow.

Venue 210, which may comprise a theme park attraction such as a roller coaster ride or other type of adventure ride, for example, includes real-life simulation environment 212, through which vehicle 214 can move. Vehicle 214, which may comprise a theme park ride vehicle, such as, for example, a roller coaster car or carriage, is designed to transport a local user (not shown in Figure 2, but corresponding to local user 118, in Figure 1) through real-life simulation environment 212, along a known path. Vehicle 214 is configured to move through real-life simulation environment 212 of venue 210, under the control of venue management system 220. As shown in the embodiment of Figure 2, venue management system 220 is interactively linked to multi-user experience server 230.

In some embodiments, vehicle 214 may correspond to an interactive bumper car, or kart racing vehicle, for which a travel path is known by virtue of being detected as the vehicle moves through real-life simulation environment 212. In those embodiments, detection of the known path may result from sensors on vehicle 214, and/or sensors provided in real-life simulation environment 212, for example. In another embodiment, a travel path of vehicle 214 may be known by virtue of its being a predetermined path, such as where vehicle 214 comprises a vehicle restricted to a fixed track or rail line, for instance, and the known path comprises the predetermined fixed course.

Virtual environment generator 232, residing on multi-user experience server 230, is configured to produce a virtual environment corresponding to real-life simulation environment 212. In addition, virtual environment generator 232 is configured to produce virtual events, which in some embodiments may be synchronized to real events occurring in venue 210. Virtual events may correspond to real events such as the movement of vehicle 214 through real-life simulation environment 212, and/or interactions between the local user occupying vehicle 214, and venue 210, as recorded by multi-user experience server 230, for example. In some embodiments, in addition to virtual events in the virtual environment being synchronized with real events in real-life simulation environment 212, real events in real-life simulation environment 212 may be synchronized to virtual events in the virtual environment produced by virtual environment generator 232.

Multi-user experience server 230 is configured to enable the local user to perceive remote user 208 and to affect virtual events in the virtual environment corresponding to real-life simulation environment 212, produced by virtual environment generator 232. In one embodiment, multi-user experience server 230 may be configured to provide the local user with an augmented sensory perspective comprising a selective blending of the real events occurring in real-life simulation environment 212 and the virtual events produced by virtual environment generator 232. In that embodiment, system 200 is capable of providing the local user with an augmented reality experience linked to their transport through real-life simulation environment 212.

Moreover, in some embodiments, multi-user experience server 230 is further configured to enable remote user 208 to perceive the local user and to affect real events in real-life simulation environment 212. As an example of these latter embodiments, a real-life simulation environment replicating a space combat sequence may include one or more local gun turrets representing enemy space station weaponry. Multi-user experience server 230 may, in conjunction with venue management system 220, for example, enable remote user 208 to control aim and/or firing of the one or more local gun turrets, so as to affect events in real-life simulation environment 212.

Thus, in some embodiments, system 200 enables substantially exact overlay of events occurring in the virtual environment engaged by remote user 208, and real-life simulation environment 212 engaged by the local user. As a result, the local user and remote user 208 can interact in a seemingly shared experience provided by the seamless integration of their respective real-life simulation and virtual environments. Consequently, in those embodiments, remote user 208 may perceive the local user as a participant in the virtual environment, and to be interacting directly with remote user 208 in that environment. At the same time, in those same embodiments, the local user may perceive remote user 208 as a presence in real-life simulation environment 212, able to produce real-life effects for the local user due to their seeming direct interaction with the local user within real-life simulation environment 212.

According to the embodiment of Figure 2, system 200 includes sensory effects controller 224 and haptic feedback system 226. As shown in system 200, sensory effects controller 224 and haptic feedback system 226 receive input from multi-user experience server 230, and are in communication with venue management system 220. Sensory effects controller 224, under the direction of multi-user experience server 230, may be configured to produce audio and/or visual effects, generate odors or aromas, and provide special effects such as wind, rain, fog, and so forth, in venue 210. Sensory effects controller 224 may provide those effects to produce real events in venue 210 corresponding to virtual events produced by virtual environment generator 232, as well as to produce real events corresponding to interaction with the local user occupying vehicle 214, for example.

Haptic feedback system 226 may be configured to produce tactile effects in order to generate real events in venue 210 simulating the consequences of virtual events occurring in the virtual environment produced by virtual environment generator 232. The tactile effects produced by haptic feedback system 226 may result, for example, from displacement, rotation, tipping, and/or jostling of vehicle 214, to simulate the consequences of virtual events produced by virtual environment generator 232. Although in the embodiment of Figure 2 sensory effects controller 224 and haptic feedback system 226 are shown as distinct elements of system 200, in other embodiments the functionality provided by sensory effects controller 224 and haptic feedback system 226 may be provided by a single control system. In still other embodiments, sensory effects controller 224 and haptic feedback system 226 may be subsumed within venue management system 220.

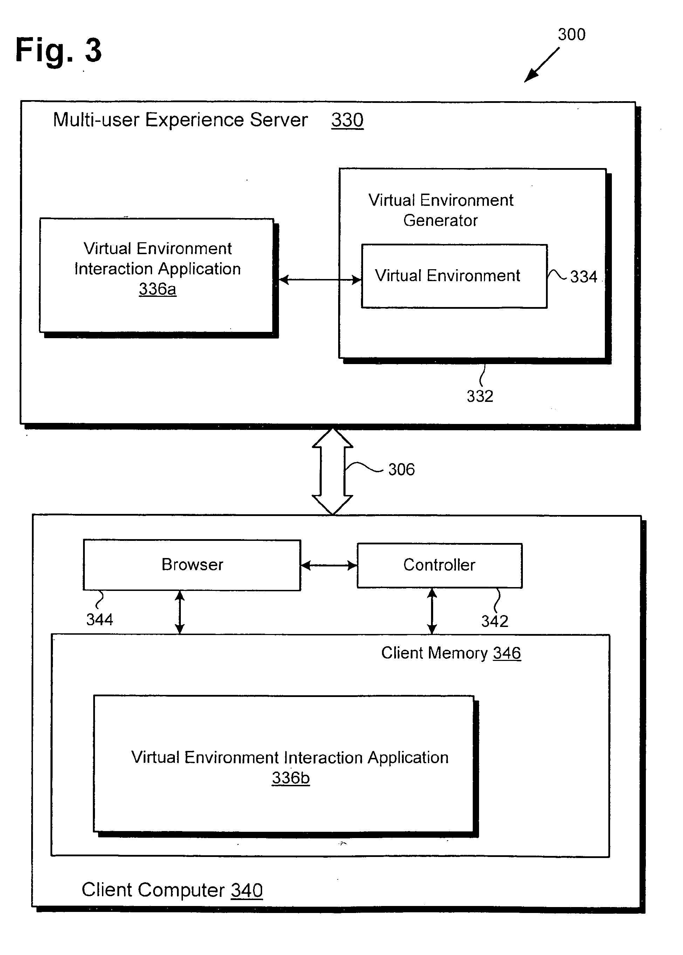

Turning now to Figure 3, Figure 3 shows a more detailed embodiment of a system for enabling a local user of a real-life simulation environment to interact with a remote user of a corresponding virtual environment, focusing on interactivity of the remote user, according to one embodiment of the present invention. Subsystem 300, in Figure 3, comprises multi-user experience server 330 in communication with client computer 340 via communication link 306, corresponding respectively to multi-user experience server 130 in communication with client computer 140 via WAN 106a, in Figure 1. It is noted that communication link 306, in Figure 3, may also correspond to LAN 106b linking remote user 108b and multi-user experience server 130, in Figure 1.

Multi-user experience server 330, in Figure 3, is shown to comprise virtual environment generator 332 including virtual environment 334, corresponding to virtual environment generator 232, in Figure 2. Also present on multi-user experience server 330 is virtual environment interaction application 336a, which has not been represented in previous figures. Client computer 340 comprises controller 342, browser 344, and client memory 346. Also shown in Figure 3 is virtual environment interaction application 336b.

As shown in Figure 3, virtual environment interaction application 336a may be accessed through communication link 306, corresponding to WAN 106a, in Figure 1. In that instance, virtual environment interaction application 336a may comprise a web application, accessible over a packet network such as the Internet. In that embodiment, virtual environment interaction application 336a may be configured to execute as a server based application on multi-user experience server 330, for example, to enable a remote user, such as remote user 108a, in Figure 1, to engage the virtual environment hosted on multi-user experience server 130 and corresponding to the real-life simulation environment of venue 110. Alternatively, virtual environment interaction application 336a may reside on a server supporting a LAN, such as LAN 106b, or be included in another type of limited distribution network.

According to the embodiment of Figure 3, however, client computer 340 receives virtual environment interaction application 336b as a download via communication link 306 from multi-user experience server 330. Once transferred, virtual environment interaction application 336b may be stored in client memory 346 and executed locally on client computer 340, as a desktop application, for example. Client computer 340 includes controller 342, which may be the central processing unit for client computer 340, for example, in which role controller 342 runs the client computer operating system, launches browser 344, and facilitates use of virtual environment interaction application 336b. Browser 344, under the control of controller 342, may execute virtual environment interaction application 336b to enable a user to access and interact with virtual environment 334 hosted by multi-user experience server 330.

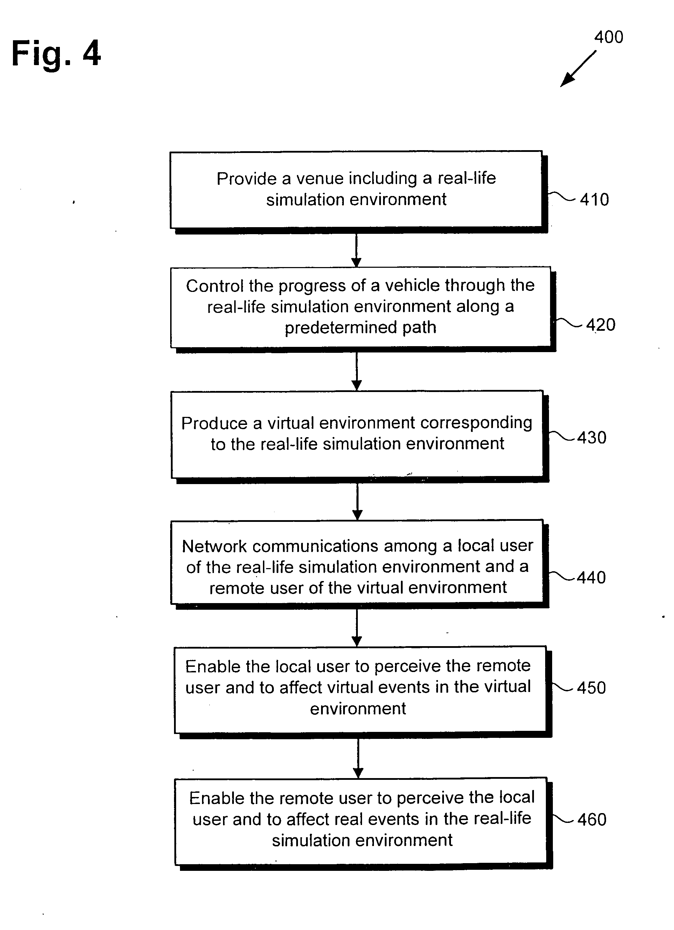

The systems of Figure 1 through Figure 3 will be further described with reference to Figure 4, which presents a method for enabling a local user of a real-life simulation environment to interact with a remote user of a corresponding virtual environment, according to one embodiment of the present invention. Certain details and features have been left out of flowchart 400 that are apparent to a person of ordinary skill in the art. For example, a step may consist of one or more substeps or may involve specialized equipment or materials, as known in the art. While steps 410 through 460 indicated in flowchart 400 are sufficient to describe one embodiment of the present method, other embodiments may utilize steps different from those shown in flowchart 400, or may include more, or fewer steps.

Beginning with step 410 in Figure 4, step 410 of flowchart 400 comprises providing a venue including a real-life simulation environment. In order to animate and clarify the discussion of the systems shown in Figures 1, 2, and 3, as well as the present example method, let us consider, as a specific embodiment of the disclosed inventive concepts, the previously introduced roller coaster ride/shooting game provided as a theme park attraction replicating a space combat sequence. In view of that specific embodiment, and referring to Figure 2, providing a venue including a real-life simulation environment in step 410 may be seen to correspond to providing venue 210 including real life simulation environment 212, which may comprise the physical setup for the roller coaster ride itself, i.e., track, roller coaster carriages, special effects generating equipment, and so forth.

Venue 210 represents a controlled environment in which the features of objects within the venue are known, and the locations of those objects are mapped. For example, in the present specifically evoked theme park attraction embodiment, the location, size, and spatial orientation of video monitors configured to provide visual effects for the ride may be fixed and known. As another example, the location and performance characteristics of special effects generators, such as wind machines, audio speakers, interactive objects, and the like, may be predetermined and mapped.

The example method of flowchart 400 continues with step 420, which comprises controlling progress of vehicle 214 through real-life simulation environment 212. Continuing with the example of a theme park attraction roller coaster ride/shooting game, vehicle 214 may be seen to correspond to a theme park ride vehicle, such as a roller coaster car or carriage, for example. According to the present method, vehicle 214 is configured to transport a local user through real-life simulation environment 212 along a known path, which in the present example may correspond to the roller coaster track.

The progress of vehicle 214 through real-life simulation environment 212 of venue 210, may be controlled by venue management system 220. As may be apparent from review of steps 410 and 420, because vehicle 214 is moving in a controlled and predictable way along a known path through real-life simulation environment 212, various aspects of the vehicle motion through venue 210, such as it's instantaneous speed, elevation, and direction of motion, for example, may be anticipated with a high degree of accuracy.

Flowchart 400 continues with step 430, comprising producing a virtual environment corresponding to real-life simulation environment 212. Referring to Figure 3, producing corresponding virtual environment 334, in step 430, may be performed by virtual environment generator 332 on multi-user experience server 330, for example. In the example of the roller coaster ride/shooting game presently under consideration, multi-user experience server 330 would be configured to host a computer virtual simulation of passage of vehicle 214 through real-life simulation environment 212, in Figure 2.

As a result of step 430, two complementary realities corresponding to passage of vehicle 214 through real-life simulation environment 212 are created. One reality, the physical reality of the roller coaster ride in venue 210, is created by the real events occurring during transport of the local user through venue 210. The second reality is a computer simulated version of the roller coaster ride/shooting game that is generated so as to substantially reproduce the ride experience in virtual form. Consequently, the local user may enjoy the real visceral excitement of motion on a roller coaster, while interacting with remote user 208 engaging a virtual representation of the real-life simulation environment provided by multi-user experience server 230.

Continuing with step 440 of flowchart 400, step 440 comprises networking communications among the local user of real-life simulation environment 212 and remote user 208 of the corresponding virtual environment. Referring to Figure 1, networking of communications may be performed by LAN 106b, either alone, or in conjunction with WAN 106a, to enable local user 118 and remote users 108b and/or 108a to access multi-user experience server 130 concurrently.

Moving to step 450 and returning to Figure 2, step 450 comprises enabling the local user to perceive remote user 208 and to affect virtual events in the virtual environment. Step 450 may be performed by multi-user experience server 230, which hosts the virtual environment. Where, for example, virtual events correspond to interactions between the local user occupying vehicle 214 and a virtual representation of the roller coaster ride/shooting game displayed to the local user, those events may be communicated to multi-user experience server 230 and recorded there.

For example, the local user may use firing controls provided on vehicle 214 to score virtual hits on virtual targets identified as being under the control of remote user 208, though display of an avatar or other symbolic representation of an identity associated with remote user 208. In some embodiments, the role assumed by remote user 208 may be adversarial. In other embodiments, however, the participation of more than one remote user in a multi-user interaction may include remote users allied with the local user, as well as remote adversaries. In those embodiments enabling the local user to perceive the remote users may include identifying the remote users as friends or foes.

Continuing with step 460 of flowchart 400, step 460 comprises enabling remote user 208 to perceive the local user and to affect real events in real-life simulation environment 212. As was the case for step 450, step 460 may be performed by multi-user experience server 230, which is interactively linked to venue management system 220. Where, for example, real events correspond to real-life simulation environment 212 consequences of virtual events produced by remote user 208, those events may be communicated to venue management system 220, and special effects corresponding to the events may be produced in real-life simulation environment 212.

For example, as previously described, a real-life simulation environment replicating a space combat sequence may include one or more local gun turrets representing enemy space station weaponry. Multi-user experience server 230 may, in conjunction with venue management system 220, for example, enable remote user 208 to control aim and/or firing of the one or more local gun turrets, so as to affect events in real-life simulation environment 212. If remote user 208 uses the gun turret to score hits on vehicle 214, for example, and accumulate points exceeding a certain point threshold, vehicle 214 may be diverted to an alternative track during a subsequent ride interval. Such opportunities may occur one or more times during the ride, so that the course of events in real-life simulation environment 212 may depend to some extent on actions taken by remote user 208.

In one embodiment, the method of flowchart 400 may further comprise synchronizing the real events and the virtual events so that the real events can be represented in the virtual environment and the virtual events can be represented in the real-life simulation environment. Synchronizing the real-life simulation environment and virtual environment enables a substantially seamless overlay of the virtual and real environments provided according to the present method. As a result, the local user may interact with the remote user and affect events in both environments in real time. For instance, video screens and speakers bordering the space ride could produce images and sounds corresponding to destruction of an enemy spacecraft as a result of a virtual hit achieved by either the local user or the remote user, through interaction with their respective interactive environments.

In some embodiments, the real events and the virtual events are selectively blended to provide the local user with an augmented sensory perspective, thereby providing an augmented reality experience. An augmented sensory perspective may be produced by the substantially seamless overlay of the virtual reality of the virtual environment and the real events occurring in the real-life simulation environment of the venue. Moreover, in one embodiment, the method of flowchart 400 may further comprise utilizing a haptic feedback system, such as haptic feedback system 226 in Figure 2, to generate real effects in real-life simulation environment 212 corresponding to virtual effects in the virtual environment. For example, destruction of an enemy spacecraft, in addition to being accompanied by audio and visual effects produced in real-life simulation environment 212, may be rendered even more realistic by recoil or jostling of vehicle 214 to simulate impact of the shock wave produced by the exploding spacecraft. Analogously, virtual hits by enemy spacecraft on vehicle 214 may be accompanied by displacements, rotations, tipping, and the like, produced by haptic feedback system 226.

Thus, the present application discloses a system and method for enabling a local user of a real-life simulation environment to interact with a remote user of a corresponding virtual environment that advantageously enhances the realism of the experience for both groups of users. From the above description of the invention it is manifest that various techniques can be used for implementing the concepts of the present invention without departing from its scope. Moreover, while the invention has been described with specific reference to certain embodiments, a person of ordinary skill in the art would recognize that changes can be made in form and detail without departing from the spirit and the scope of the invention. It should also be understood that the invention is not limited to the particular embodiments described herein, but is capable of many rearrangements, modifications, and substitutions without departing from the scope of the invention.

## Claims

1. A system for enabling a local user of a real-life simulation environment to interact with a remote user of a corresponding virtual environment, the system comprising:
a venue including the real-life simulation environment for use by the local user;
a venue management system configured to control real events occurring within the real-life simulation environment;
a multi-user experience server interactively linked to the venue management system, the multi-user experience server including a virtual environment generator configured to produce the virtual environment corresponding to the real-life simulation environment; and
a communication network enabling the local user and the remote user to access the multi-user experience server concurrently;
the multi-user experience server configured to enable the local user to perceive the remote user and to affect virtual events in the virtual environment corresponding to the real-life simulation environment.

2. The system of claim 1, wherein the multi-user experience server is further configured to enable the remote user to perceive the local user and to affect real events in the real-life simulation environment.

3. The system of claim 1, wherein virtual events in the virtual environment are synchronized with real events in the real-life simulation environment and real events in the real-life simulation environment are synchronized with virtual events in the virtual environment.

4. The system of claim 1, wherein the real-life simulation environment is configured to provide an augmented reality experience to the local user.

5. The system of claim 1, wherein the communication network comprises a local area network (LAN).

6. The system of claim 1, further comprising a bridge server configured to interface the multi-user experience server with a wide area network (WAN).

7. A method for enabling a local user of a real-life simulation environment to interact with a remote user of a corresponding virtual environment, the method comprising:
providing a venue including the real-life simulation environment;
controlling progress of a vehicle through the real-life simulation environment, the vehicle configured to transport the local user along a known path through the real-life simulation environment;
producing the corresponding virtual environment;
networking communications among the local user and the remote user to enable the local user and the remote user to concurrently access a multi-user experience server hosting the corresponding virtual environment; and
enabling the local user to perceive the remote user and to affect virtual events in the virtual environment.

8. The method of claim 7, further comprising enabling the remote user to perceive the local user and to affect real events in the real-life simulation environment.

9. The method of claim 7, further comprising utilizing a haptic feedback system to generate real effects in the real-life simulation environment replicating the consequences of virtual events in the virtual environment.

10. The method of claim 7, further comprising synchronizing virtual events in the virtual environment with real events in the real-life simulation environment, and real events in the real-life simulation environment with virtual events in the virtual environment.

11. The method of claim 10, further comprising selectively blending the real events and the virtual events to provide the local user with an augmented sensory perspective, thereby providing the local user with an augmented reality experience.

12. The method of claim 7, wherein networking communications among the local user and the remote user to enable the local user and the remote user to concurrently access the multi-user experience server comprises utilizing a local area network (LAN).

13. A system for enabling a local user of a real-life simulation environment to interact with a remote user of a corresponding virtual environment, the system comprising:
a venue including the real-life simulation environment for use by the local user;
a venue management system configured to control real events occurring within the real-life simulation environment;
a multi-user experience server interactively linked to the venue management system, the multi-user experience server including a virtual environment generator configured to produce the virtual environment corresponding to the real-life simulation environment; and
a communication network enabling the local user and the remote user to access the multi-user experience server concurrently;
the multi-user experience server configured to enable the remote user to perceive the local user and to affect real events in the real-life simulation environment.

14. The system of claim 13, wherein virtual events in the virtual environment are synchronized with real events in the real-life simulation environment and real events in the real-life simulation environment are synchronized with virtual events in the virtual environment.

15. The system of claim 13, wherein the real-life simulation environment is configured to provide an augmented reality experience to the local user.
